# EUROPÄISCHE PATENTSCHRIFT

(11) **EP 1 125 663 B1**
(45) Veröffentlichungstag und Bekanntmachung des Hinweises auf die Patenterteilung: **10.06.2009**
(21) Anmeldenummer: 01810116.2
(22) Anmeldetag: 06.02.2001
(51) Int. Cl.: B23B 51/02

(54) **Bohrwerkzeug für Gestein**
Drilling tool for stone
Outil de forage pour la pierre

(30) Priorität: 16.02.2000 DE 10006932
(43) Veröffentlichungstag der Anmeldung: 22.08.2001
(73) Patentinhaber: HILTI Aktiengesellschaft, 9494 Schaan (LI)
(72) Erfinder: Hauptmann, Udo, 86899 Landsberg/Lech (DE); Pröls, Tim, 80997 München (DE)
(74) Vertreter: Wildi, Roland

(56) Entgegenhaltungen:
- EP-A- 0 884 448
- DE-U- 29 819 388

## Beschreibung

Die Erfindung bezeichnet ein Bohrwerkzeug mit einem Vollhartmetallkopf für Gestein oder Beton, welches in ein antreibendes Handwerkzeug eingespannt durch drehende und schlagend schwingende Bewegungen einen abrasiven Materialabtrag erzeugt.

Bohrwerkzeuge für Gestein oder Beton weisen aufgrund der zum abrasiven Materialabtrag bei geringem Verschleiss benötigten hohen Härte im Werkzeugkopf eingesetzte Teile aus Hartmetall auf, welche mit dem restlichen Bohrwerkzeug fest verbunden sind. Üblicherweise werden Hartmetallplatten im Werkzeugkopf eingelötet, bspw. nach der DE2008825 oder der DE 298 193 88 U. Die relativ geringe Biegesteifigkeit der Hartmetallplatten begünstigt ein Ausbrechen dieser aus dem restlichen Bohrwerkzeug, insbesondere bei Armierungseisentreffern.

Aus der Druckschrift DE4339245 ist die Ausführung des gesamten Werkzeugskopfes aus Hartmetall als Vollhartmetallkopf vorbekannt. Vollhartmetallköpfe in kompakter, d.h. im wesentlichen in konvexer vieleckiger Form mit ähnlichen Seitenlängen, besitzen eine hohe innere Steifigkeit. Zur Verhinderung einer Verhakung im Armierungseisen sind üblicherweise zusätzlich zwischen den Hauptschneiden ausschliesslich am radialen Rand angeordnete axial zurückversetzte Nebenschneiden vorhanden, welche durch ihren Eindringwiderstand und der Massenträgheit einem zu tiefen Eindringen der Hauptschneiden in das Armierungseisen entgegenwirken, indem sie das Bohrwerkzeug temporär vom Armierungseisen abheben. Bei grösseren Durchmessern des Bohrwerkzeuges ist bei einer derartigen Ausführung das benötigte Volumen des Vollhartmetallkopfes in kompakter Form bezüglich fertigungstechnischer und kostenseitiger Aspekte nachteilig.

Zudem ist eine leicht axial konkave, d.h. eine durch die radial äusseren Schneiden senkrecht zur Drehachse verlaufende Ebene nicht hinterschneidende, Form der einen stumpfen Winkel symmetrisch zur Drehachse ausbildenden und axial zurückversetzten radial verlaufenden Nebenschneide vorbekannt. Diese leicht axial konkave Form der Nebenschneide dient im Zusammenwirken mit dem von einer nicht konkaven Hauptschneide geschnittenen Bohrloch als axialer Freiraum für den Abtransport des Bohrmehls von der Spitze des Werkzeugkopfes weg und verhindert eine leistungsmindernde Bohrmehlverdichtung vor der Spitze. Nachteilig bei einer derartigen leicht axial konkaven Form ist die zweckgemässe Kombination mit einer nicht konkaven Form der Hauptschneide, welche ein punktgenaues Anbohren erschwert.

Aus der Druckschrift DE19707115 ist ein Bohrwerkzeug mit mehr als zwei, jeweils ganzzählig rotationssymmetrisch angeordneten, radialen Schneiden und einem nicht aus einzelnen Hartmetallplatten bestehenden sondern einstückig ausgeführten prismatischen Vollhartmetallkopf vorbekannt, welcher in entsprechende Nuten mit jeweils axial verlaufenden Flächen im restlichen Bohrwerkzeug eingesetzt mit diesen und der Stirnfläche fest verbunden ist. Durch die Kombination der Befestigung eines biegesteifen Vollhartmetallkopfes auf der Stirnfläche einerseits sowie dessen zusätzlicher Befestigung in jeweils achsparalleler nutartiger Verzapfung im radial äusseren Bereich andererseits ist auch bei Bohrwerkzeugen mit grösseren Durchmessern eine bruchsichere Befestigung der Schneiden auch gegenüber Armierungstreffern gewährleistet. Unvorteilhafterweise vermindert sich mit der Anzahl der Hauptschneiden der für den abrasiven Materialabtrag verfügbare lokale Anpressdruck der Schneiden und damit die Bohrleistung. Nachteilig bei einer derartigen Lösung ist zudem die für eine zusätzliche achsparallele nutartige Verzapfung benötigte Querschnittsfläche je Schneide, welche einer Ausnehmung nicht mehr zur Verfügung steht. Mit mehr als zwei Schneiden ergeben sich bei hoher Bohrleistung dadurch Probleme bei der Ausräumung des abrasiv abgetragenen Materials.

Nach der Druckschrift EP884448 ist ein Vollhartmetallkopf mit "X-förmiger Anordnung der vier Schneiden vorbekannt, wobei sich die Haupt- und die als Zusatzschneiden ausgeführten Nebenschneiden jeweils diametral zur Drehachse erstrecken und nicht rechtwinklig zueinander angeordnet sind. Die Hauptschneiden bilden in ihrer Ebene einen stumpfen Winkel symmetrisch und mit Spitze zur Drehachse aus. Die Nebenschneiden sind senkrecht zu dieser ausgebildet und axial derart zurückversetzt, dass der Innenbereich des Bohrloches im wesentlichen von den Hauptschneiden, der Aussenbereich hingegen von den Zusatzschneiden, abrasiv abgetragen wird. Derartig ausgebildete Zusatzschneiden neigen bei Armierungstreffern durch die hohe Beanspruchung zu Brüchen.

Der "X-förmige Vollhartmetallkopf besitzt eine zweizählig rotationssymmetrische im wesentlichen kreuzweise axial spiegelsymmetrische prismatische Form. Die Grundfläche ist mit jeweils einer tiefen, sich in das innere radiale Drittel erstreckenden, konkaven stumpfwinkeligen Einkerbung parallel zur den Schneiden über die längere Seite der Grundfläche versehen, welche als Freiraum für die Ausräumung des abrasiv abgetragenen Materials dient. In Drehrichtung läuft die Zusatzschneide der Hauptschneide nach, d.h. bildet mit dieser einen spitzen Winkel aus. Somit ist die grosse Ausnehmung vor der Hauptschneide angeordnet.

Eine kleine ebenfalls konkave Ausnehmung der jeweils kürzeren Seite der Grundfläche beschränkt sich auf den radialen Randbereich und dient der geringeren Ausräumung des abrasiv abgetragenen Materials vor der Nebenschneide. Nachteiligerweise wird durch den in Drehrichtung stumpfen Winkel zwischen der Nebenschneide und der Hauptschneide ein relativ weiter von der Massenträgheit zu überbrückender Drehwinkel zur durch die Nebenschneide bewirkten Verminderung einer Verhakung benötigt, welcher gerade mit bei geringerer Drehzahl betriebenen Bohrwerkzeugen mit grösseren Durchmessern kaum realisierbar ist und somit keinen hinreichenden Schutz vor Brüchen bei Armierungstreffern darstellt.

Es ist die Aufgabe der Erfindung unter Vermeidung obiger Nachteile ein Bohrwerkzeug mit einem Vollhartmetallkopf für Gestein aufzuzeigen, welcher auch bei grösseren Durchmessern sowohl für eine hohe Bohrleistung einen hohen lokalen Druck auf die Schneiden, eine ausreichende Ausräumung des abrasiv abgetragenen Materials sowie ein punktgenaues Anbohren als auch ein gegenüber Armierungstreffern beanspruchungsreduzierendes Verhalten sowie eine bruchsichere Ausführung und Befestigung der Schneiden aus Hartmetall ermöglicht.

Diese Aufgabe wird durch die in den unabhängigen Ansprüchen aufgezeigten Merkmale im wesentlichen gelöst. Vorteilhafte Weiterbildungen ergeben sich aus den Unteransprüchen.

Die Erfindung beschränkt sich auf Bohrwerkzeuge mit einem Vollhartmetallkopf mit "X-förmiger Anordnung der vier Schneiden, wobei sich die Haupt- und die Nebenschneiden jeweils diametral zur Drehachse erstrecken und nicht rechtwinkelig zueinander angeordnet sind. Vorteilhaft weisen die erfindungsgemässen Bohrwerkzeuge einen Durchmesser von 12 bis 40 mm auf. Wesentlich ist, dass die zur Verminderung der Beanspruchung der Hauptschneiden bei Armierungstreffern abhebend wirkend ausgebildeten Nebenschneiden diesen vorlaufend angeordnet sind. Der zwischen diesen in der Ebene senkrecht zur Drehachse ausgebildete Winkel liegt im Bereich zwischen 40 und 90°. Somit muss nur ein kleiner Drehwinkel über die Massenträgheit überbrückt werden.

Durch die jeweils zwischen zwei benachbarten Schneiden jeweils stückweise parallel zu diesen verlaufende radial konkave Ausnehmung am Umfang der Querschnittsfläche sowie deren prismatische axiale Erstreckung über den Vollhartmetallkopf ermöglicht eine hinreichende Ausräumung des abrasiv abgetragenen Materials in den sich an den Werkzeugkopf als Vollhartmetallkopf anschliessenden Wendel, insbesondere auch vor der Hauptschneide. Zudem ermöglicht ein Teil der längs der Drehachse verlaufenden Seitenflächen dieser Ausnehmungen, vorteilhaft vor der Nebenschneide, eine zusätzliche Befestigung des Vollhartmetallkopfes in nutförmigen Verzapfungen am restlichen Bohrwerkzeug. Dieser Teil der Seitenflächen weist vorteilhaft eine Phase zur Stirnfläche zur Brechung der Kante auf. Somit wird eine bruchsicherere Befestigung des Vollhartmetallkopfes am restlichen Bohrwerkzeug und insbesondere eine druckseitige Unterstützung der Hauptschneiden ermöglicht. Eine vorteilhafte, zwei diametral gegenüberliegenden konkaven Ausnehmungen des Vollhartmetallkopfes zugeordnete, Nut in dem restlichen Bohrwerkzeug führt bei der Befestigung des Vollhartmetallkopfes zu einer Selbstzentrierung dessen.

Weiter vorteilhaft ist die Form der Hauptschneiden, welche in der Spitze in einer Querschneide münden, leicht axial konkav ausgebildet, wodurch sich bezüglich des Spitzenbereiches ein relativ spitzerer Winkel zum punktgenauen Anbohren durch die Querschneide und bezüglich des radialen Aussenbereiches ein relativ stumpferer Winkel der Hauptschneiden zur Drehachse ausbildet, welcher die Energie der axialen Schläge des Bohrwerkzeuges nahezu vollständig axial und somit verlustarm in das abzutragende Material im Bohrgrund einleitet. Weiter vorteilhaft ist die Form der Nebenschneiden stark axial konkav, d.h. eine durch die radial äusseren Bereiche der Nebenschneiden senkrecht zur Drehachse verlaufende Ebene schneidend, ausgebildet. Im Zusammenwirken mit der leicht axial konkaven Form der Hauptschneide entsteht somit eine axiale Aussparung zum Bohrmehlabtransport von der Spitze. Die Übergangsfläche im Sektor zwischen benachbarten Schneiden ist zur Erzielung einer grossen Aussparung zum Abtransport des Bohrmehls sowie zur Erzielung einer hohen inneren Steifigkeit des Vollhartmetallkopfes vorteilhaft jeweils umfänglich axial konkav ausgebildet.

Zudem ist durch die Ausführung der Haupt- und Nebenschneiden als Teil des Vollhartmetallkopfes eine definierte Anordnung dieser zueinander gegeben, welche nicht durch Fertigungstoleranzen bei der Befestigung des Vollhartmetallkopfes mit dem restlichen Bohrwerkzeug beeinflusst ist. Günstig wird zur Erzielung eines vibrationsarmen Betriebs der axiale Abstand der Nebenschneiden derart gewählt, dass der höchste Punkt der axialen Hüllkurve der Nebenschneiden gerade nicht über die axiale Hüllkurve der Hauptschneiden herausragt. Ebenso lässt sich günstig durch aufeinander abgestimmte Hüllkreise von Haupt- und Nebenschneide, insbesondere durch einen radialen Unterstand der Nebenschneiden, ein vibrationsarmer Betrieb und eine gleichmässig runde Bohrlochgeometrie erzielen.

Die Erfindung wird nachfolgend anhand einer vorteilhaften Ausführungsform beschrieben. Dazu zeigen
Fig.1 einen Vollhartmetallkopf eines Bohrwerkzeuges in perspektivischer Darstellung
Fig.2 eine Aufsicht des Vollhartmetallkopfes
Fig.3 eine Seitenansicht und
Fig. 4 eine Seitenansicht aus einem anderen Winkel.

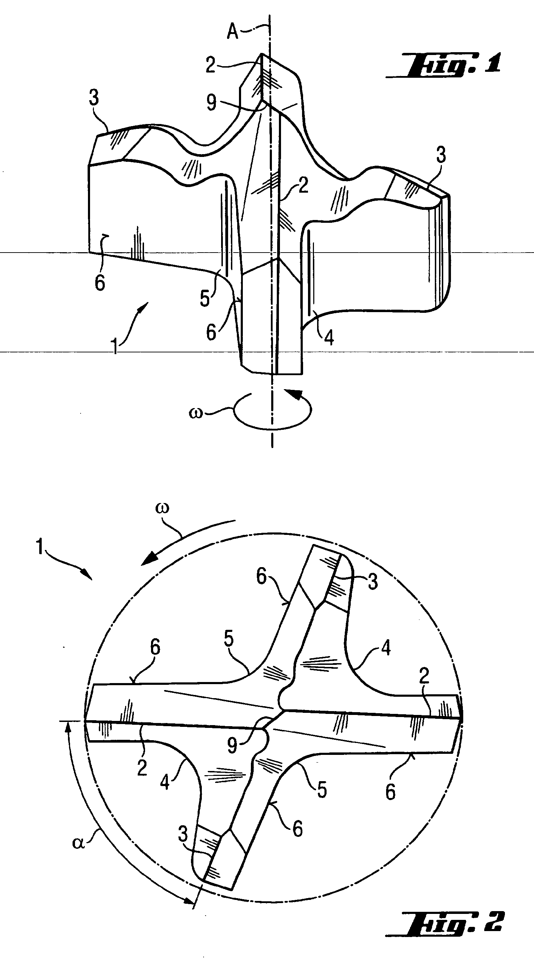

Nach Fig. 1 weist ein Vollhartmetallkopf 1 für ein Bohrwerkzeug mit vorteilhaft 12 bis 40mm Bohrdurchmesser eine "X-förmige Anordnung von vier Schneiden 2; 3 auf, wobei sich die Hauptschneiden 2 und die Nebenschneiden 3 jeweils diametral zur Drehachse A erstrecken und nicht rechtwinklig zueinander angeordnet sind. Die im spitzen Winkel den Hauptschneiden 2 zugeordneten Nebenschneiden 3 sind bezüglich der Drehrichtung ω den Hauptschneiden 2 vorlaufend angeordnet.

Nach Fig. 2 liegt der zwischen den Hauptschneiden 2 und den Nebenschneiden 3 in der Ebene senkrecht zur Drehachse ausgebildete Winkel α im Bereich zwischen 40 und 90°, wobei die Nebenschneiden 3 bezüglich der Drehrichtung ω den Hauptschneiden 2 vorlaufend angeordnet sind. Gegenüber der Hüllkurve der Hauptschneiden 2 weisen die Nebenschneiden 3 einen radialen Unterstand auf. Jeweils zwischen zwei benachbarten Schneiden 2; 3 ist eine jeweils stückweise parallel zu diesen verlaufende radial konkave Ausnehmung 4; 5 am Umfang der Querschnittsfläche sowie deren prismatische axiale Erstreckung über den Vollhartmetallkopf 1 vorhanden. Der Teil der längs der Drehachse der Ausnehmungen 5 verlaufenden Seitenflächen 6, vorteilhaft vor der Nebenschneide 3, ermöglichst eine zusätzliche Befestigung des Vollhartmetallkopfes in nutförmigen Verzapfungen am restlichen Bohrwerkzeug.

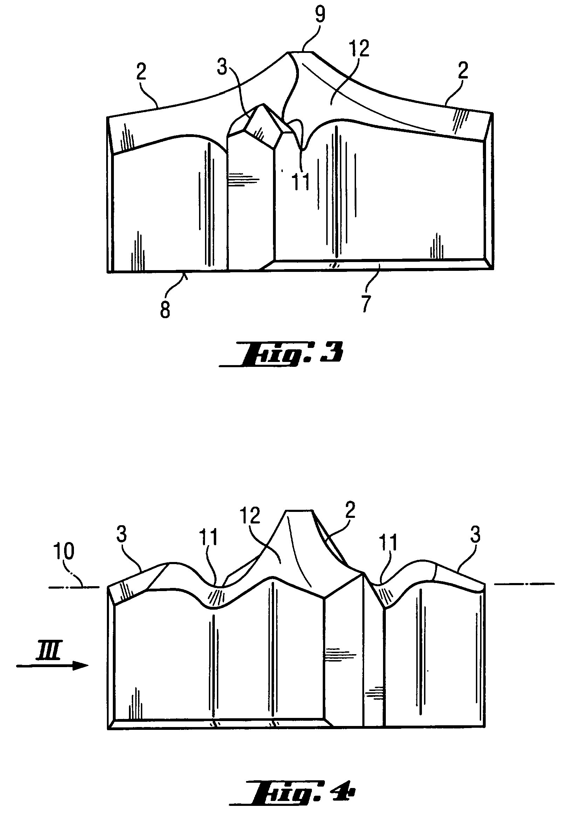

Nach Fig. 3 weist dieser Teil der Seitenflächen 6 eine Phase 7 zur Stirnfläche 8 zur Brechung der Kante auf. Die Form der Hauptschneiden 2, welche in der Spitze in einer Querschneide 9 münden, sind leicht axial konkav ausgebildet. Der axiale Abstand der Nebenschneiden 3 ist derart gewählt, dass der höchste Punkt der axialen Hüllkurve der Nebenschneiden 3 gerade nicht über die axiale Hüllkurve der Hauptschneiden 2 herausragt.

Nach Fig. 4 ist die Form der Nebenschneiden 3 stark axial konkav ausgebildet, indem eine durch die radial äusseren Bereiche der Nebenschneide 3 senkrecht zur Drehachse verlaufende Ebene 10 geschnitten wird. Im Zusammenwirken mit der leicht axial konkaven Form der Hauptschneide 2 entsteht somit eine axiale Aussparung 11 zum Bohrmehlabtransport von der Spitze. Die Übergangsfläche 12 im Sektor zwischen benachbarten Schneiden 2; 3 ist jeweils umfänglich axial konkav ausgebildet.

## Patentansprüche

1. Bohrwerkzeug mit einem Vollhartmetallkopf (1), welcher Hauptschneiden (2) und Nebenschneiden (3) ausbildet, wobei sich die je zweifach vorhandenen, jeweils diametral angeordneten, Hauptschneiden (2) und Nebenschneiden (3) nicht rechtwinkelig gegenüberliegen, **dadurch gekennzeichnet, dass** die im spitzen Winkel α den Hauptschneiden (2) zugeordneten Nebenschneiden (3) bezüglich der Drehrichtung ω den jeweiligen Hauptschneiden (2) vorlaufend angeordnet sind.

2. Bohrwerkzeug nach Anspruch 1, **dadurch gekennzeichnet, dass** der zwischen den Hauptschneiden (2) und den Nebenschneiden (3) in der Ebene senkrecht zur Drehachse A ausgebildete Winkel α im Bereich zwischen 40 und 90° liegt.

3. Bohrwerkzeug nach einem der vorherigen Ansprüche, **dadurch gekennzeichnet, dass** zwischen zwei benachbarten Schneiden (2; 3) eine stückweise parallel zu diesen verlaufende radial konkave Ausnehmung (4; 5) am Umfang der Querschnittsfläche sowie deren prismatische axiale Erstreckung über den Vollhartmetallkopf (1) vorhanden ist.

4. Bohrwerkzeug nach Anspruch 3, **dadurch gekennzeichnet, dass** der Teil der bezüglich der Drehrichtung ω vor der Nebenschneide (3) angeordneten längs der Drehachse A verlaufenden Seitenflächen (6) der Ausnehmung (5) eine Phase (7) zu einer Stirnfläche (8) aufweist.

5. Bohrwerkzeug nach einem der vorherigen Ansprüche, **dadurch gekennzeichnet, dass** die Hauptschneiden (2) in der Spitze in einer Querschneide (9) münden.

6. Bohrwerkzeug nach einem der vorherigen Ansprüche, **dadurch gekennzeichnet, dass** die Form der Hauptschneiden (2) leicht axial konkav ausgebildet ist.

7. Bohrwerkzeug nach einem der vorherigen Ansprüche, **dadurch gekennzeichnet, dass** die Form der Nebenschneiden (3) stark axial konkav ausgebildet ist.

8. Bohrwerkzeug nach einem der vorherigen Ansprüche, **dadurch gekennzeichnet, dass** der axiale Abstand der Nebenschneiden (3) derart gewählt ist, dass der höchste Punkt der axialen Hüllkurve der Nebenschneiden (3) gerade nicht über die axiale Hüllkurve der Hauptschneiden (2) herausragt.

9. Bohrwerkzeug nach einem der vorherigen Ansprüche, **dadurch gekennzeichnet, dass** gegenüber der Hüllkurve der Hauptschneiden (2) die Nebenschneiden (3) einen radialen Unterstand aufweisen.

10. Bohrwerkzeug nach einem der vorherigen Ansprüche, **dadurch gekennzeichnet, dass** eine Übergangsfläche (12) im Sektor zwischen benachbarten Schneiden (2; 3) umfänglich axial konkav ausgebildet ist.

## Claims

1. A drilling tool with a solid carbide head (1) forming main cutting edges (2) and auxiliary cutting edges (3), in which the two main cutting edges (2) disposed diametrically opposite one another and the two auxiliary cutting edges (3) likewise disposed diametrically opposite one another do not lie at right angles to one another, **characterized in that** the auxiliary cutting edges (3) associated with the main cutting edges (2) and forming an acute angle α therewith are disposed in direction of rotation ω in front of the respective main cutting edges (2).

2. A drilling tool according to Claim 1, **characterized in that** the angle α formed between the main cutting edges (2) and the auxiliary cutting edges (3) in the plane perpendicular to the rotational axis A is in the range between 40° and 90°.

3. A drilling tool according to one of the preceding claims, **characterized in that** between two adjacent cutting edges (2; 3) there is a recess (4; 5) which is concave in radial direction and in parts extends parallel to said two adjacent cutting edges (2, 3) and is located at the circumference of the cross-sectional area with its prismatic form extending in axial direction over the solid carbide head (1).

4. A drilling tool according to Claim 3, **characterized in that** the portion of the side surface (6) of the recess (5) disposed, in direction of rotation ω, in front of the auxiliary cutting edge (3) and extending along the rotational axis A has a chamfer (7) at an end surface (8).

5. A drilling tool according to one of the preceding claims, **characterized in that** the main cutting edges (2) end in a chisel edge (9) at the tip.

6. A drilling tool according to one of the preceding claims, **characterized in that** the shape of the main cutting edges (2) is slightly concave in axial direction.

7. A drilling tool according to one of the preceding claims, **characterized in that** the shape of the auxiliary cutting edges (3) is distinctly concave in axial direction.

8. A drilling tool according to one of the preceding claims, **characterized in that** the axial clearance of the auxiliary cutting edges (3) is such that the highest point of the axial envelope curve of the auxiliary cutting edges (3) does not project beyond the axial envelope curve of the main cutting edges (2).

9. A drilling tool according to one of the preceding claims, **characterised in that**, compared with the envelope curve of the main cutting edges (2), the auxiliary cutting edges (3) are set back in radial direction.

10. A drilling tool according to one of the preceding claims, **characterized in that** a transitional surface (12) in the sector between adjacent cutting edges (2; 3) is formed so as to be concave at the circumference in axial direction.

## Revendications

1. Foret comprenant une tête pleine en métal dur (1), laquelle comporte des taillants principaux 12) et des taillants secondaires (3), les taillants principaux (2) et les taillants secondaires (3) prévus chacun en double et opposés diamétralement l'un à l'autre n'étant pas disposés à angle droit les uns par rapport aux autres, **caractérisé en ce que** les taillants secondaires (3), desquels forment un angle aigu α avec les taillants principaux (2), sont situés devant les taillants principaux associés (2) par rapport au sens de rotation ω.

2. Foret selon la revendication 1, **caractérisé en ce que** l'angle α formé entre les taillants principaux (2) et les taillants secondaires (3) dans le plan perpendiculaire à l'axe de rotation A est compris entre 40 et 90°.

3. Foret selon une des revendications précédentes, **caractérisé en ce qu'**un évidement concave radial (4 ; 5) s'étendant en partie entre deux taillants voisins (2 ; 3) parallèlement à ceux-ci est ménagé sur le pourtour de la surface transversale ainsi que de son extension axiale prismatique sur la tête pleine en métal dur (1).

4. Foret selon la revendication 3, **caractérisé en ce que** la partie des surfaces latérales (6) de l'évidement (5) qui s'étendent suivant l'axe de rotation A et se trouvent devant le taillant secondaire (3) par rapport au sens de rotation ω présente un biseau (7) vers une face frontale (8).

5. Foret selon une des revendications précédentes, **caractérisé en ce que**, au niveau de la pointe, les taillants principaux (2) se terminent par un taillant transversal (9).

6. Foret selon une des revendications précédentes, **caractérisé en ce que** la forme des taillants principaux (2) est légèrement concave axialement.

7. Foret selon une des revendications précédentes, **caractérisé en ce que** la forme des taillants secondaires (3) est fortement concave axialement.

8. Foret selon une des revendications précédentes, **caractérisé en ce que** l'écartement axial des taillants secondaires (3) est choisi de façon que le point le plus haut de l'enveloppante axiale des taillants secondaires (3) ne dépasse pas l'enveloppante axiale des taillants principaux (2).

9. Foret selon une des revendications précédentes, **caractérisé en ce que**, par rapport à l'enveloppante des taillants principaux (2), les taillants secondaires (3) présentent un retrait radial.

10. Foret selon une des revendications précédentes, **caractérisé en ce que** la surface de transition (12) dans le secteur situé entre des taillants voisins (2; 3) est de forme axialement concave en périphérie.
